# EUROPEAN PATENT SPECIFICATION

(11) **EP 4 238 463 B1**
(45) Date of publication and mention of the grant of the patent: **20.11.2024**
(21) Application number: 22188899.3
(22) Date of filing: 04.08.2022
(51) Int. Cl.: A47J 43/046, A47J 43/07

(54) **FEED CHUTE ASSEMBLY FOR A FOOD PROCESSOR**
EINFÜHRSCHACHTANORDNUNG FÜR EINE KÜCHENMASCHINE
ENSEMBLE DE GOULOTTE D'ALIMENTATION POUR UN PROCESSEUR ALIMENTAIRE

(30) Priority: 02.03.2022 US 202217684505
(43) Date of publication of application: 06.09.2023
(73) Proprietor: SharkNinja Operating LLC, Needham, MA 02494 (US)
(72) Inventor: Lyell, Nathan, Woking (GB); Lee, Leo, Guang Dong (CN); Gentile, Scott, Framingham, MA (US); Michienzi, Ryan, Needham, MA (US); James, Jonathan, Witney (GB); Bannister, Sam William, London (GB); Ko, Fredrick, Shatin, New Territory (HK); Yin, Robin, Changde City (CN); Pei, Kevin, Shenzhen, Guangdong, 518000 (CN)
(74) Representative: Harris, Oliver John Richard

(56) References cited:
- EP-A1- 2 832 274
- US-A1- 2003 205 635
- US-A1- 2014 021 278

## Description

### FIELD

This disclosure relates generally to motorized food processors and, more particularly, to a feed chute assembly for use with food processors.

### BACKGROUND

Consumers commonly use food processors for blending, cutting, and dicing food products in a wide variety of settings, including home kitchens, professional restaurants and food services, and large-scale industries. Food processors offer a convenient alternative to chopping or dicing by hand, and often come with a range of operational settings and modes adapted to provide specific types or amounts of food processing catered to particular food products. Current food processors often include a feed chute for introducing food into the food processor for cutting by the internal blades. Many consumers prefer a wider feed chute for introducing more and larger ingredients, thereby shortening food preparation time and adding convenience. However, food processors with sufficiently large feed chutes usually require safety mechanisms that prevent or at least minimize injury to the consumers' hands as a result of introducing the food into the chute. Such mechanisms can make it more difficult for the user to clean the feed chute after use.

US2014/021278A1 describes a food processor that is provided with a wide feed tube. The food processor has a pusher that cooperates with a safety mechanism. The safety mechanism comprises a linkage assembly that prevents the food processor's motor from operating unless the pusher is inserted into the feed tube. US2003/205635A1 discloses a safety device for a food processor, where the switching-on of the motor depends on the presence of a pusher in the chute through which the products are introduced. The pusher has a rib with a lower end that bears against the upper end of a lid rod which bears against a bowl rod with a lower end that can bear against a switch. EP2832274A1 describes a juicer that includes a linkage assembly operated with a pusher and a trigger assembly for allowing power to be supplied to motor. The linkage assembly includes a pressure component set in the end of the opening of a feed tube. The pressure component is connected with a follower lever, the follower lever installed in the inside of the feed tube can be moved up and down. The trigger assembly includes some signal generators installed in the bottom of the follower lever and some inductors installed in juicer base correspond to the signal generators. The inductors are connected electrically with motor's control circuit.

### SUMMARY

This disclosure describes a feed chute assembly having a safety mechanism that helps prevent injury to the consumer while also providing an easy to clean surface. The feed chute assembly includes a lid coupleable to a container of the food processing system. The lid has a feed chute for introducing food towards rotating blades at the top of the container. A linkage cover housing a linkage component for activating the motor couples to the feed chute. The linkage cover defines a channel within an inside perimeter of the feed chute. A user inserts a pusher into the feed chute such that a rib on the pusher extends into the channel, operatively engaging the linkage component to activate the motor. When the user removes the pusher from the feed chute, the motor stops the spinning blades. Advantageously, the configuration of the channel of this disclosure makes it easier for the user to clean the feed chute assembly after use.

The feed chute assembly of this invention comprises the features of claim 1. A method of operating a feed chute assembly comprises the features of claim 13. Preferred embodiments are the subject of the dependent claims.

A feed chute assembly of a food processing system of this invention includes a lid coupleable to a first end of a container. The lid has a feed chute for introducing food into the container. A sidewall of the feed chute defines an inner and outer surface. A linkage cover couples to the feed chute. The linkage cover houses a linkage component and defines a channel within an inside perimeter of the feed chute. The channel at least partially communicates with a portion of the linkage component through an opening in the sidewall of the feed chute. A pusher is insertable into the feed chute. A portion of an outer surface of the pusher defines a recess with respect to a remainder of the outer surface of the pusher. A rib is disposed within the recess. The rib is configured for insertion into the channel of the linkage cover such that, when the rib is at least partially inserted into the channel, the rib operatively engages the portion of the linkage component.

In further implementations, the linkage cover includes a first portion contacting the outer surface of the feed chute. The first portion houses the linkage component. A second portion contacts the inner surface of the feed chute. The second portion defines the channel extending vertically along the inner surface of the feed chute. In some implementations, the second portion includes a guide housing extending from the inner surface of the sidewall within the inside perimeter. The guide housing extends into the recess when the pusher is inserted into the feed chute. In some implementations, a shape of the rib corresponds to a shape of the channel. In some implementations, a cross section of the rib has one of an L-shape, T-shape, I-shape, and a wineglass shape. In some implementations, a length of the channel is less than a height of the inner surface of the feed chute. In some implementations, a portion of the inner surface of the feed chute located below the channel provides an easy to clean surface. In some implementations, the food processing system further includes a base housing a motor and the container has a second end removeably coupleable to the base. In some implementations, the portion of the linkage component is a roller operatively connected to a linkage system for activating the motor. In some implementations, the motor can only operate when the rib is at least partially inserted into the channel. In some implementations, wherein the pusher includes an upper peripheral rim extending outward from the sidewall. When the pusher is fully inserted into the feed chute, the upper peripheral rim covers a pilot opening of the channel. In some implementations, the pusher is configured to accommodate a second and smaller pusher.

According to the invention, a method of operating a feed chute assembly of a food processing system of this disclosure includes inserting a pusher into a feed chute of a lid coupled to a first end of a container. A sidewall of the feed chute defines an inner and outer surface. A linkage cover couples to the feed chute. The linkage cover houses a linkage component and defines a channel within an inside perimeter of the feed chute. The channel at least partially communicates with a portion of the linkage component through an opening in the sidewall of the feed chute. A portion of an outer surface of the pusher defines a recess with respect to a remainder of the outer surface of the pusher. A rib is disposed within the recess. In response to the inserting of the pusher, the rib at least partially inserts into the channel of the linkage cover such that the rib engages the portion of the linkage component.

In further implementations, the linkage cover includes a first portion contacting the outer surface of the feed chute. The first portion houses the linkage component. A second portion contacts the inner surface of the feed chute. The second portion defines the channel extending vertically along the inner surface of the feed chute. In some implementations, the second portion includes a guide housing extending from the inner surface of the sidewall within the inside perimeter. The guide housing extends into the recess when the pusher is inserted into the feed chute. In some implementations, a shape of the rib corresponds to a shape of the channel. In some implementations, a length of the channel is less than a height of the inner surface of the feed chute. In some implementations, engaging the rib with the portion of the linkage component includes engaging the rib with a roller operatively connected to a linkage system for activating a motor. In some implementations, the motor can only operate when the rib is at least partially inserted into the channel. In some implementations, the pusher includes an upper peripheral rim extending outward from the sidewall, and the method further includes covering a pilot opening of the channel with the upper peripheral rim when the pusher is fully inserted into the feed chute.

A reading of the following detailed description and a review of the associated drawings will make apparent the advantages of these and other features. Both the foregoing general description and the following detailed description serve as an explanation only and do not restrict aspects of the disclosure as claimed.

### BRIEF DESCRIPTION OF THE DRAWINGS

Reference to the detailed description, combined with the following figures, will make the disclosure more fully understood, wherein:
FIG. 1 is a perspective view of a food processor, including a feed chute and pusher of the feed chute assembly according to some implementations of this disclosure;
FIG. 2A is a detailed view of the feed chute of FIG. 1 coupled to the linkage cover of FIG. 1 according to some implementations;
FIG. 2B is a detailed view of the pusher of FIG. 1 according to some implementations;
FIGS. 2C and 2D illustrate the interface between the feed chute and the pusher of FIG. 1 according to some implementations;
FIG. 3 illustrates the linkage mechanism of the food processor of FIG. 1 according to some implementations;
FIG. 4A shows a first configuration of the rib and the channel of the feed chute assembly of FIG. 1 according to some implementations; and
FIGS. 4B-D show a second configuration of the rib and the channel of the feed chute assembly of FIG. 1 according to some implementations.

### DETAILED DESCRIPTION

In the following description, like components have the same reference numerals, regardless of different illustrated implementations. To illustrate implementations clearly and concisely, the drawings may not necessarily reflect appropriate scale and may have certain features shown in somewhat schematic form. The disclosure may describe and/or illustrate features in one implementation, and in the same way or in a similar way in one or more other implementations, and/or combined with or instead of the features of the other implementations within the scope of the appended claims.

In the specification and claims, for the purposes of describing and defining the invention, the terms "about" and "substantially" represent the inherent degree of uncertainty attributed to any quantitative comparison, value, measurement, or other representation. The terms "about" and "substantially" moreover represent the degree by which a quantitative representation may vary from a stated reference without resulting in a change in the basic function of the subject matter at issue. Open-ended terms, such as "comprise," "include," and/or plural forms of each, include the listed parts and can include additional parts not listed, while terms such as "and/or" include one or more of the listed parts and combinations of the listed parts. Use of the terms "top," "bottom," "above," "below" and the like helps only in the clear description of the disclosure and does not limit the structure, positioning and/or operation of the feed chute assembly in any manner.

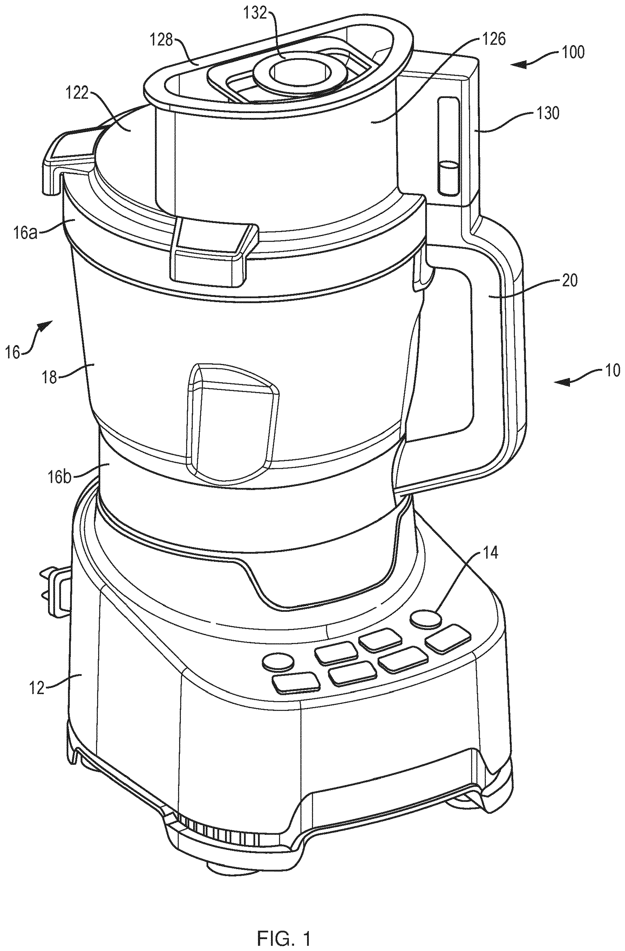

FIG. 1 shows an implementation of a food processor 10 for use with the feed chute assembly 100 of this disclosure. In some implementations, the food processor 10 can generally comprise a base 12 housing a motor (not shown), an electronic display 14, and a container 16. The container 16 may further comprise a bowl 18 with a handle 20. The feed chute assembly 100 includes a lid 122, a linkage cover 130 and any of a first pusher 128, and a second pusher 132. The lid 122 can removeably couple to a first end 16a of the container 16 while a second end 16b of the container 16 can removeably couple to the base 12. Notably, the lid 122 does not function as a lid or cover for the feed chute assembly 100, but rather as a lid or cover for the food processor 10. The lid 122 can comprise an integral feed chute 126 for introducing food into the container 16. The feed chute 126 may receive the first pusher 128 for guiding the food toward rotating blades (not shown) disposed near the first end 16a of the container 16. The linkage cover 130 may communicate with the handle 20, as further described below. In some implementations, the first pusher 128 can accommodate the smaller, second pusher 132.

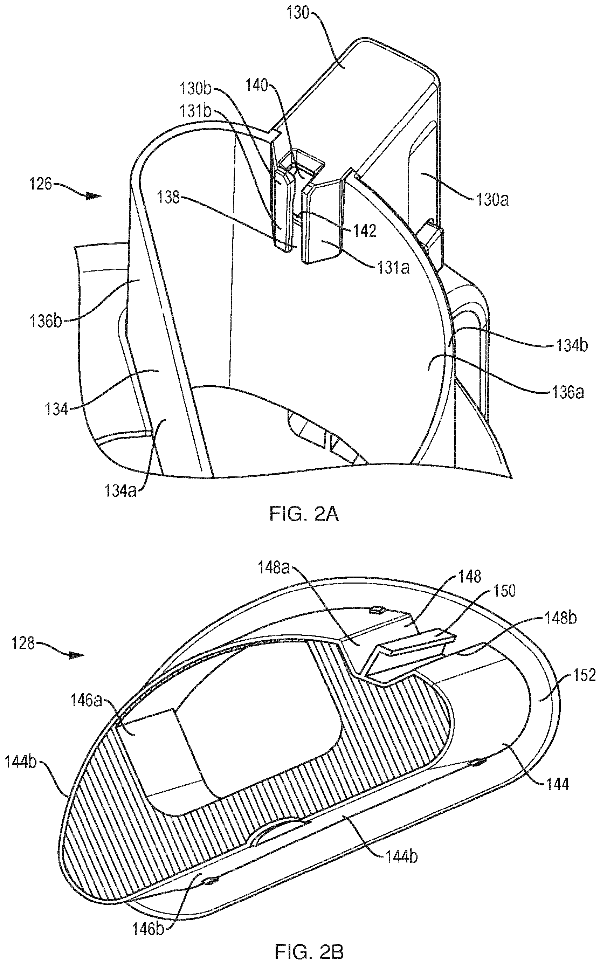

FIG. 2A shows an implementation of the feed chute 126 of this disclosure coupled to the linkage cover 130. As shown in FIG. 2A, the feed chute 126 can have a substantially "D" shape. For example, the feed chute 126 can comprise a sidewall 134 having a linear portion 134a and a curved portion 134b. The sidewall 134 furthermore defines an inner surface 136a and an outer surface 136b. The linkage cover 130 may couple to the curved portion 134b of the sidewall 134. In some implementations, the linkage cover 130 may have a first portion 130a contacting the outer surface 136a of the sidewall 134 and a second portion 130b, i.e., a guide housing, contacting the inner surface 136a of the sidewall 134. The second portion 130b may define a channel 138 extending vertically along the inner surface 136a of the sidewall 134 between opposing angled sides 131a,b. The channel 138 may at least partially communicate with a roller 140 of a linkage component electronically connected to the motor through an opening 142 in the sidewall 134, as further described below. In some implementations, a length of the channel 138 may be less than a full height of the inner surface 136a of the sidewall 134. When the channel 138 does not extend for the full height of the inner surface 136a of the sidewall 134, the portion of the inner surface 136a located below the channel 138 may be smooth, advantageously providing the user with an easy to clean surface.

FIG. 2B shows an implementation of the first pusher 128 of this disclosure. Like the feed chute 126, the first pusher 128 can have a substantially "D" shape for forming a close fit within the feed chute 126. For example, the first pusher 128 can comprise a sidewall 144 having a linear portion 144a and a curved portion 144b. The sidewall 144 can furthermore define an inner surface 146a and an outer surface 146b. In some implementations, the first pusher 128 may include an upper peripheral rim 152 extending outward from the sidewall 144. A portion of the outer surface 146b of the curved portion 144b defines a recess 148 with respect to a remainder of the outer surface 146b. In some implementations, the recess 148 can extend an entire height of the sidewall 144, as shown. The recess 148 may be partially defined by opposing angled sides 148a,b corresponding to the opposing angled sides 131a,b of the second portion 130b of the linkage cover 130.

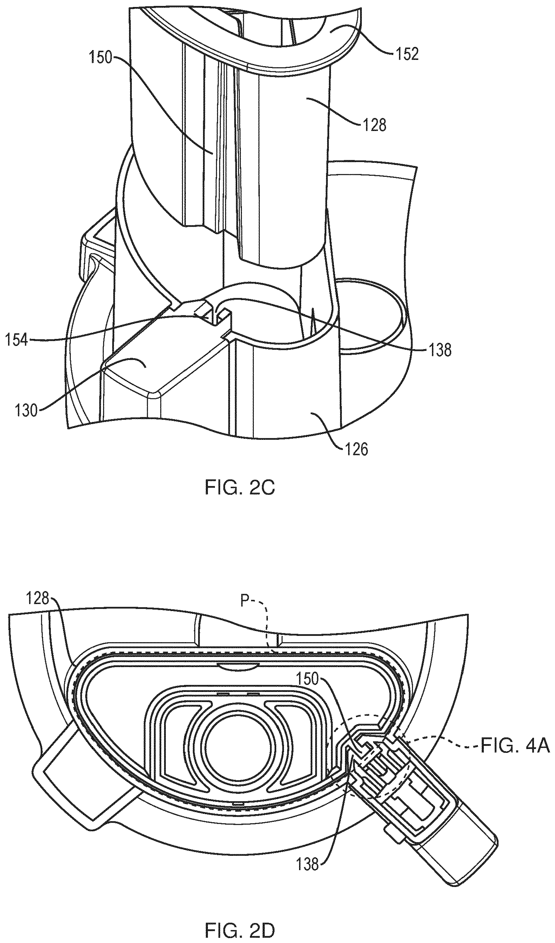

Still referring to FIG. 2B, in some implementations, a rib 150 may extend along an entire height of the recess 148 without projecting beyond the outer surface 146b. However, the disclosure also contemplates that the rib 150 may extend for less than an entire height of the recess 148. Thus, the recess 148 can advantageously provide a protected area to prevent damage to the rib 150. In some implementations, the rib 150 may be molded with the first pusher 128. However, the disclosure also contemplates that the rib 150 could be molded separately and attached to the first pusher 128. The recess 148 and the rib 150 may be located on the first pusher 128 such that, when a user inserts the first pusher 128 into the feed chute 126, the rib 150 inserts into the channel 138 of the linkage cover 130, as shown in FIG. 2C. When the user at least partially inserts the rib 150 into the channel 138, the rib 150 may operatively engage the roller of the linkage component (FIG. 2A). When the user fully inserts the rib 150 into the channel 138, the upper peripheral rim 152 may cover a pilot opening 154 of the channel 138. As shown in FIG. 2D, this configuration of the rib 150 and the channel 138 may allow both the rib 150 and the channel 138 to reside within an inner perimeter P of the feed chute 128.

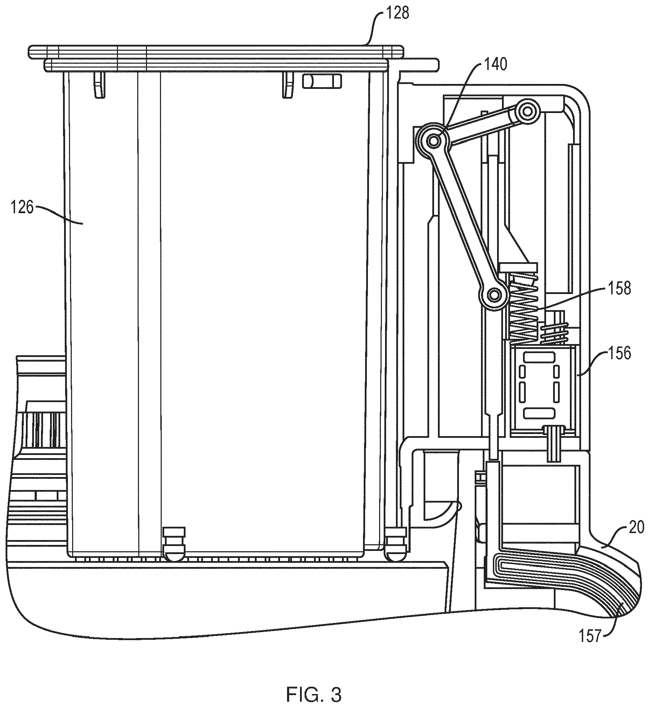

As shown in FIG. 3, engagement of the rib 150 with the roller 140 of the linkage component 156 may cause the roller 140 to rotate about an arc and convert into linear vertical motion to activate a microswitch (not shown) of the food processor 10 through an intermediate link 157 in the handle 20. A microprocessor or printed circuit board (PCB) (not shown) in the base 12 may sense the activation of the microswitch, thus allowing the motor to supply power to rotate the blades. If the motor is still running when the user removes the first pusher 128 from the feed chute 126, the microprocessor or PCB may also sense a deactivation of the microswitch. Deactivation of the microswitch can stop the rotation of the blades within a short time frame - for example, less than 4 seconds. A biasing mechanism, such as a spring 160, may allow the roller 140 to return to its starting position when the user removes the first pusher 128 from the feed chute 126. Advantageously, this safety mechanism may prevent the user from accessing the interior of the feed chute 126 and blades while the motor rotates the blades. Moreover, the motor can only operate when the user at least partially inserts the rib 150 into the channel 138.

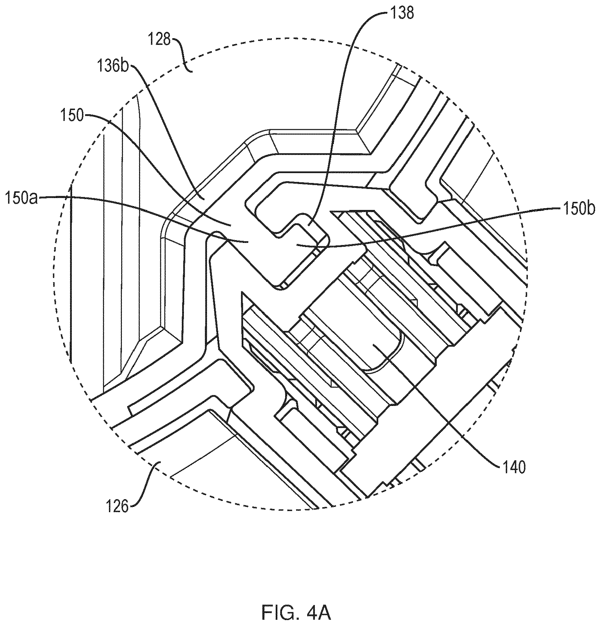

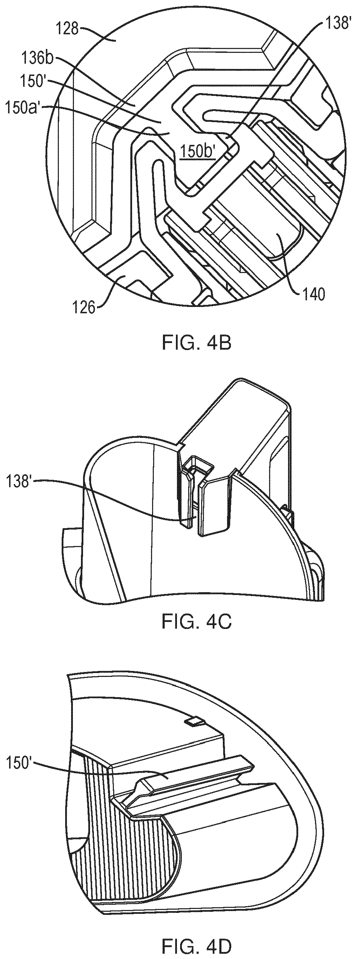

As shown in FIG. 4A, implementations of the rib 150 can have a shape selected to correspond to a shape of the channel 138. For example, a cross-section of the rib 150 may have an "L" shape, with a stem portion 150a extending from the outer surface 136b of the first pusher 128 within the recess 148, and a leg portion 150b extending substantially transverse to the stem portion 150a. Likewise, a cross-section of the channel 138 can have an L-shape to accommodate the L-shaped rib 150. The L-shaped configuration of the rib 150 and the channel 138 advantageously provides the user with a smooth motion as the user inserts the first pusher 128 into the feed chute 126. In an alternative implementation, shown in FIGS. 4B-D, a cross-section of the rib 150' may have a "wineglass" shape, with a stem portion 150a' extending from the outer surface 136b of the first pusher 128 within the recess 148, and a symmetrically-angled portion 150b' for engaging the roller 140. Likewise, a cross-section of the channel 138' may have a wineglass shape to accommodate the wineglass shaped rib 150'. The wineglass shaped configuration of the rib 150' and the channel 138' may advantageously provide a constant travel distance on the first pusher 128 to ensure that the microswitch is always pressed when the first pusher 128 reaches the same point inside the feed chute 126. The disclosure also contemplates other suitable configurations of the rib 150 and the channel 138, such as a "T" or an "I" shape.

While the disclosure particularly shows and describes preferred implementations, those skilled in the art will understand that various changes in form and details may exist without departing from the scope of the invention as defined by the appended claims. The scope of this present application intends to cover such variations. As such, the foregoing description of implementations of the present application does not intend to limit the full scope conveyed by the appended claims.

## Claims

1. A feed chute assembly (100) for a food processing system, the feed chute assembly comprising:
a lid (122) coupleable to a first end of a container (16), the lid having a feed chute (126) for introducing food into the container, a sidewall of the feed chute (126) defining an inner and outer surface;
a linkage cover (130) coupled to the feed chute (126), the linkage cover housing a linkage component (156) and defining a channel (138) within an inside perimeter of the feed chute (126), the channel (138) at least partially in communication with a portion of the linkage component (156) through an opening in the sidewall of the feed chute (126);
a pusher (128) insertable into the feed chute (126), a portion of an outer surface (146b) of the pusher defining a recess (148) with respect to a remainder of the outer surface of the pusher (128); and
a rib (150) disposed within the recess (148), the rib (150) configured for insertion into the channel (138) of the linkage cover (130) such that, when the rib (150) is at least partially inserted into the channel (138), the rib (150) operatively engages the portion of the linkage component (156).

2. The feed chute assembly of claim 1, wherein the linkage cover (130) comprises:
a first portion (130a) contacting the outer surface of the feed chute (126), the first portion housing the linkage component; and
a second portion (130b) contacting the inner surface of the feed chute (126), the second portion defining the channel extending vertically along the inner surface of the feed chute (126).

3. The feed chute assembly of claim 2, wherein the second portion (130b) comprises a guide housing extending from the inner surface of the sidewall (134) within the inside perimeter, the guide housing extending into the recess when the pusher (128) is inserted into the feed chute (126).

4. The feed chute assembly of any of claims 1-3, wherein a shape of the rib (150) corresponds to a shape of the channel (138).

5. The feed chute assembly of any of claims 1-4, wherein a cross section of the rib (150) has one of an L-shape, T-shape, I-shape, and a wineglass shape.

6. The feed chute assembly of any of claims 1-5, wherein a length of the channel (138) is less than a height of the inner surface of the feed chute (126).

7. The feed chute assembly of any of claims 1-6, wherein a portion of the inner surface of the feed chute (126) located below the channel provides an easy to clean surface.

8. The feed chute assembly of any of claims 1-7, wherein the food processing system further comprises a base (12) housing a motor, and wherein the container (16) has a second end (16b) removeably coupleable to the base (12).

9. The feed chute assembly of claim 8, wherein the portion of the linkage component (156) is a roller operatively connected to a linkage system for activating the motor.

10. The feed chute assembly of claim 8, wherein the motor can only operate when the rib (150) is at least partially inserted into the channel (138).

11. The feed chute assembly of any of claims 1-10, wherein the pusher (128) includes an upper peripheral rim (152) extending outward from the sidewall (144), and wherein, when the pusher (128) is fully inserted into the feed chute (126), the upper peripheral rim (152) covers a pilot opening (154) of the channel (138).

12. The feed chute assembly of any of claims 1-11, wherein the pusher (128) is configured to accommodate a second and smaller pusher (132).

13. A method of operating a feed chute assembly (100) of a food processing system, the method comprising:
inserting a pusher (128) into a feed chute (126) of a lid (122) coupled to a first end of a container (16), a sidewall of the feed chute (126) defining an inner and outer surface, a linkage cover (130) coupled to the feed chute (126), the linkage cover (130) housing a linkage component (156) and defining a channel (138) within an inside perimeter of the feed chute, the channel (138) at least partially in communication with a portion of the linkage component (156) through an opening (142) in the sidewall (134) of the feed chute (126), a portion of an outer surface (146b) of the pusher defining a recess (148) with respect to a remainder of the outer surface of the pusher (128), a rib (150) disposed within the recess (148);
wherein, in response to the inserting of the pusher (128), the rib (148) at least partially inserts into the channel (138) of the linkage cover (130) such that the rib (150) engages the portion of the linkage component (156).

14. The method of claim 13, wherein the linkage cover (130) comprises:
a first portion (130a) contacting the outer surface of the feed chute, the first portion housing the linkage component; and
a second portion (130b) contacting the inner surface of the feed chute, the second portion defining the channel extending vertically along the inner surface of the feed chute.

15. The method of claim 14, wherein the second portion (130b) comprises a guide housing extending from the inner surface of the sidewall within the inside perimeter, the guide housing extending into the recess (148) when the pusher (128) is inserted into the feed chute (126).

## Patentansprüche

1. Zuführschachtanordnung (100) für ein Lebensmittelverarbeitungssystem, wobei die Zuführschachtanordnung Folgendes umfasst:
einen Deckel (122), der an ein erstes Ende eines Behälters (16) koppelbar ist, wobei der Deckel einen Zuführschacht (126) zum Einfüllen von Lebensmitteln in den Behälter aufweist, wobei eine Seitenwand des Zuführschachts (126) eine Innen- und eine Außenfläche definiert;
eine Gestängeabdeckung (130) die an den Zuführschacht (126) gekoppelt ist, wobei die Gestängeabdeckung eine Gestängekomponente (156) umschließt und einen Kanal (138) in einem Innenumfang des Zuführschachts (126) definiert, wobei der Kanal (138) durch eine Öffnung in der Seitenwand des Zuführschachts (126) mindestens teilweise mit einem Abschnitt der Gestängekomponente (156) in Kommunikation steht;
einen Schieber (128), der in den Zuführschacht (126) einsetzbar ist, wobei ein Abschnitt einer Außenfläche (146b) des Schiebers mit Bezug auf einen Rest der Außenfläche des Schiebers (128) eine Ausnehmung (148) definiert; und
eine Rippe (150), die in der Ausnehmung (148) angeordnet ist, wobei die Rippe (150) zum Einsetzen in den Kanal (138) der Gestängeabdeckung (130) ausgelegt ist, derart, dass, wenn die Rippe (150) mindestens teilweise in den Kanal (138) eingesetzt ist, die Rippe (150) in den Abschnitt der Gestängekomponente (156) wirkmäßig einrückt.

2. Zuführschachtanordnung nach Anspruch 1, wobei die Gestängeabdeckung (130) Folgendes umfasst:
einen ersten Abschnitt (130a), der die Außenfläche des Zuführschachts (126) berührt, wobei der erste Abschnitt die Gestängekomponente umschließt; und
einen zweiten Abschnitt (130b), der die Innenfläche des Zuführschachts (126) berührt, wobei der zweite Abschnitt den Kanal definiert, der sich vertikal entlang der Innenfläche des Zuführschachts (126) erstreckt.

3. Zuführschachtanordnung nach Anspruch 2, wobei der zweite Abschnitt (130b) ein Führungsgehäuse umfasst, das sich von der Innenfläche der Seitenwand (134) im Innenumfang erstreckt, wobei sich das Führungsgehäuse in die Ausnehmung erstreckt, wenn der Schieber (128) in den Zuführschacht (126) eingesetzt ist.

4. Zuführschachtanordnung nach einem der Ansprüche 1 bis 3, wobei eine Form der Rippe (150) einer Form des Kanals (138) entspricht.

5. Zuführschachtanordnung nach einem der Ansprüche 1 bis 4, wobei ein Querschnitt der Rippe (150) eines von einer L-Form, einer T-Form, einer I-Form und einer Weinglasform aufweist.

6. Zuführschachtanordnung nach einem der Ansprüche 1 bis 5, wobei eine Länge des Kanals (138) kleiner ist als eine Höhe der Innenfläche des Zuführschachts (126).

7. Zuführschachtanordnung nach einem der Ansprüche 1 bis 6, wobei ein Abschnitt der Innenfläche des Zuführschachts (126), der sich unter dem Kanal befindet, eine einfach zu reinigende Fläche bereitstellt.

8. Zuführschachtanordnung nach einem der Ansprüche 1 bis 7, wobei das Lebensmittelverarbeitungssystem ferner eine Basis (12) umfasst, die einen Motor umschließt, und wobei der Behälter (16) ein zweites Ende (16b) aufweist, das entfernbar an die Basis (12) koppelbar ist.

9. Zuführschachtanordnung nach Anspruch 8, wobei der Abschnitt der Gestängekomponente (156) eine Rolle ist, die zum Aktivieren des Motors mit einem Gestängesystem wirkverbunden ist.

10. Zuführschachtanordnung nach Anspruch 8, wobei der Motor nur betrieben werden kann, wenn die Rippe (150) mindestens teilweise in den Kanal (138) eingesetzt ist.

11. Zuführschachtanordnung nach einem der Ansprüche 1 bis 10, wobei der Schieber (128) einen oberen Peripherierand (152) umfasst, der sich von der Seitenwand (144) nach außen erstreckt, und wobei, wenn der Schieber (128) ganz in den Zuführschacht (126) eingesetzt ist, der obere Peripherierand (152) eine Pilotöffnung (154) des Kanals (138) abdeckt.

12. Zuführschachtanordnung nach einem der Ansprüche 1 bis 11, wobei der Schieber (128) dazu ausgelegt ist, einen zweiten und kleineren Schieber (132) aufzunehmen.

13. Verfahren zum Betreiben einer Zuführschachtanordnung (100) eines Lebensmittelverarbeitungssystems, wobei das Verfahren Folgendes umfasst:
Einsetzen eines Schiebers (128) in einen Zuführschacht (126) eines Deckels (122), der an ein erstes Ende eines Behälters (16) gekoppelt ist, wobei eine Seitenwand des Zuführschachts (126) eine Innen- und eine Außenfläche definiert, wobei eine Gestängeabdeckung (130) an den Zuführschacht (126) gekoppelt ist, wobei die Gestängeabdeckung (130) eine Gestängekomponente (156) umschließt und einen Kanal (138) in einem Innenumfang des Zuführschachts definiert, wobei der Kanal (138) mit über eine Öffnung (142) in der Seitenwand (134) des Zuführschachts (126) mindestens teilweise einem Abschnitt der Gestängekomponente (156) in Kommunikation steht, wobei ein Abschnitt einer Außenfläche (146b) des Schiebers mit Bezug auf einen Rest der Außenfläche des Schiebers (128) eine Ausnehmung (148) definiert, wobei eine Rippe (150) in der Ausnehmung (148) angeordnet ist;
wobei die Rippe (148) in Reaktion auf das Einsetzen des Schiebers (128) mindestens teilweise in den Kanal (138) der Gestängeabdeckung (130) eingesetzt wird, derart, dass die Rippe (150) in den Abschnitt der Gestängekomponente (156) einrückt.

14. Verfahren nach Anspruch 13, wobei die Gestängeabdeckung (130) Folgendes umfasst:
einen ersten Abschnitt (130a), der die Außenfläche des Zuführschachts berührt, wobei der erste Abschnitt die Gestängekomponente umschließt; und
einen zweiten Abschnitt (130b), der die Innenfläche des Zuführschachts berührt, wobei der zweite Abschnitt den Kanal definiert, der sich vertikal entlang der Innenfläche des Zuführschachts erstreckt.

15. Verfahren nach Anspruch 14, wobei der zweite Abschnitt (130b) ein Führungsgehäuse umfasst, das sich von der Innenfläche der Seitenwand im Innenumfang erstreckt, wobei sich das Führungsgehäuse in die Ausnehmung (148) erstreckt, wenn der Schieber (128) in den Zuführschacht (126) eingesetzt ist.

## Revendications

1. Ensemble de goulotte d'alimentation (100) pour un système de traitement alimentaire, l'ensemble de goulotte d'alimentation comprenant :
un couvercle (122) pouvant être couplé à une première extrémité d'un récipient (16), le couvercle ayant une goulotte d'alimentation (126) pour introduire des aliments dans le récipient, une paroi latérale de la goulotte d'alimentation (126) définissant une surface interne et externe ;
un couvercle de liaison (130) couplé à la goulotte d'alimentation (126), le couvercle de liaison logeant un composant de liaison (156) et définissant un canal (138) à l'intérieur d'un périmètre intérieur de la goulotte d'alimentation (126), le canal (138) étant au moins partiellement en communication avec une partie du composant de liaison (156) à travers une ouverture dans la paroi latérale de la goulotte d'alimentation (126) ;
un poussoir (128) pouvant être inséré dans la goulotte d'alimentation (126), une partie d'une surface externe (146b) du poussoir définissant un évidement (148) par rapport à une partie résiduelle de la surface externe du poussoir (128) ; et
une nervure (150) disposée à l'intérieur de l'évidement (148), la nervure (150) étant configurée pour l'insertion dans le canal (138) du couvercle de liaison (130) de sorte que, lorsque la nervure (150) est au moins partiellement insérée dans le canal (138), la nervure (150) met en prise, de manière opérationnelle, la partie du composant de liaison (156).

2. Ensemble de goulotte d'alimentation selon la revendication 1, dans lequel le couvercle de liaison (130) comprend :
une première partie (130a) en contact avec la surface externe de la goulotte d'alimentation (126), la première partie logeant le composant de liaison ; et
une seconde partie (130b) en contact avec la surface interne de la goulotte d'alimentation (126), la seconde partie définissant le canal s'étendant verticalement le long de la surface interne de la goulotte d'alimentation (126).

3. Ensemble de goulotte d'alimentation selon la revendication 2, dans lequel la seconde partie (130b) comprend un logement de guide s'étendant à partir de la surface interne de la paroi latérale (134) dans le périmètre intérieur, le logement de guide s'étendant dans l'évidement lorsque le poussoir (128) est inséré dans la goulotte d'alimentation (126).

4. Ensemble de goulotte d'alimentation selon l'une quelconque des revendications 1 à 3, dans lequel une forme de la nervure (150) correspond à une forme du canal (138).

5. Ensemble de goulotte d'alimentation selon l'une quelconque des revendications 1 à 4, dans lequel une section transversale de la nervure (150) a l'une parmi une forme de L, une forme de T, une forme de I et une forme de verre à vin.

6. Ensemble de goulotte d'alimentation selon l'une quelconque des revendications 1 à 5, dans lequel une longueur du canal (138) est inférieure à une hauteur de la surface interne de la goulotte d'alimentation (126).

7. Ensemble de goulotte d'alimentation selon l'une quelconque des revendications 1 à 6, dans lequel une partie de la surface interne de la goulotte d'alimentation (126) située au-dessous du canal fournit une surface facile à nettoyer.

8. Ensemble de goulotte d'alimentation selon l'une quelconque des revendications 1 à 7, dans lequel le système de traitement alimentaire comprend en outre une base (12) logeant un moteur, et dans lequel le récipient (16) a une seconde extrémité (16b) pouvant être couplée, de manière amovible, à la base (12).

9. Ensemble de goulotte d'alimentation selon la revendication 8, dans lequel la partie du composant de liaison (156) est un rouleau raccordé, de manière opérationnelle, à un système de liaison pour activer le moteur.

10. Ensemble de goulotte d'alimentation selon la revendication 8, dans lequel le moteur ne peut fonctionner que lorsque la nervure (150) est au moins partiellement insérée dans le canal (138).

11. Ensemble de goulotte d'alimentation selon l'une quelconque des revendications 1 à 10, dans lequel le poussoir (128) comprend un bord périphérique supérieur (152) s'étendant vers l'extérieur à partir de la paroi latérale (144) et dans lequel lorsque le poussoir (128) est complètement inséré dans la goulotte d'alimentation (126), le bord périphérique supérieur (152) recouvre une ouverture pilote (154) du canal (138).

12. Ensemble de goulotte d'alimentation selon l'une quelconque des revendications 1 à 11, dans lequel le poussoir (128) est configuré pour loger un second poussoir plus petit (132) .

13. Procédé pour actionner un ensemble de goulotte d'alimentation (100) d'un système de traitement alimentaire, le procédé comprenant les étapes consistant à :
insérer un poussoir (128) dans une goulotte d'alimentation (126) d'un couvercle (122) couplé à une première extrémité d'un récipient (16), une paroi latérale de la goulotte d'alimentation (126) définissant une surface interne et externe, un couvercle de liaison (130) couplé à la goulotte d'alimentation (126), le couvercle de liaison (130) logeant un composant de liaison (156) et définissant un canal (138) dans un périmètre intérieur de la goulotte d'alimentation, le canal (138) étant au moins partiellement en communication avec une partie du composant de liaison (156) à travers une ouverture (142) dans la paroi latérale (134) de la goulotte d'alimentation (126), une partie d'une surface externe (146b) du poussoir définissant un évidement (148) par rapport à une partie résiduelle de la surface externe du poussoir (128), une nervure (150) disposée à l'intérieur de l'évidement (148) ;
dans lequel, en réponse à l'insertion du poussoir (128), la nervure (148) s'insère, au moins partiellement, dans le canal (138) du couvercle de liaison (130) de sorte que la nervure (150) met en prise la partie du composant de liaison (156).

14. Procédé selon la revendication 13, dans lequel le couvercle de liaison (130) comprend :
une première partie (130a) en contact avec la surface externe de la goulotte d'alimentation, la première partie logeant le composant de liaison ; et
une seconde partie (130b) en contact avec la surface interne de la goulotte d'alimentation, la seconde partie définissant le canal s'étendant verticalement le long de la surface interne de la goulotte d'alimentation.

15. Procédé selon la revendication 14, dans lequel la seconde partie (130b) comprend un logement de guide s'étendant à partir de la surface interne de la paroi latérale dans le périmètre intérieur, le logement de guide s'étendant dans l'évidement (148) lorsque le poussoir (128) est inséré dans la goulotte d'alimentation (126).
